## Europäisches Patentamt

## European Patent Office

## Office européen des brevets

(11) Veröffentlichungsnummer: **0 179 947**
**B1**

## EUROPÄISCHE PATENTSCHRIFT

(45) Veröffentlichungstag der Patentschrift:
26.07.89

(51) Int. Cl.⁴: **G 06 F 7/552**

(21) Anmeldenummer: **84113204.6**

(22) Anmeldetag: **02.11.84**

(54) Schaltungsanordnung mit digitalen Schaltkreisen zur Berechnung des Betrages einer komplexen Digitalgrösse.

(43) Veröffentlichungstag der Anmeldung:
**07.05.86 Patentblatt 86/19**

(45) Bekanntmachung des Hinweises auf die Patenterteilung:
**26.07.89 Patentblatt 89/30**

(84) Benannte Vertragsstaaten:
**DE FR NL**

(56) Entgegenhaltungen:
**IBM TECHNICAL DISCLOSURE BULLETIN, Band 27, Nr. 6, November 1983, Seiten 577-581, New York, US; C. MOLER et al.: "Replacing Square Roots by Pythagorean Sums"**

(73) Patentinhaber: **Deutsche ITT Industries GmbH, Hans-Bunte-Strasse 19 Postfach 840, D-7800 Freiburg (DE)**

(72) Erfinder: **Mehrgardt, Sönke, Dr., Häglestrasse 26, D-7801 March-Neuershausen (DE)**

ACTORUM AG

## Beschreibung

Bei einigen Verfahren digitaler Signalübertragung mit amplitudenmodulierten Signalen fällt das Problem an, zur Demodulation von Quadratursignalen die Amplitude (= Betrag)

$$B = (x^2 + y^2)^{1/2},$$

d.h. die resultierende Zeigerlänge aus einem ersten Digitalwert x und einem dazu in Quadratur stehenden zweiten Digitalwert y zu bestimmen.

Das Problem der Demodulation von Quadratursignalen tritt beispielsweise bei AM-Stereo (USA) oder auch bei der Anordnung gemäss der DE-OS 3 114 063, vergleiche Fig. 3, auf.

Man könnte diesen Betrag B elektronisch durch die Quadrierung von x und y, gefolgt von einer Berechnung der Wurzel mit bekannten Methoden, beispielsweise Tabelle und/oder Polynom-Approximation, berechnen. Eine andere Methode wäre eine Berechnung über Logarithmen mittels Tabellen.

Die Erfindung betrifft eine Schaltungsanordnung mit digitalen Schaltkreisen zur Berechnung der resultierenden Zeigerlänge bei Quadratursignalen als Annäherungswert mittels einer Grundschaltung, der die beiden Quadratursignale, nämlich der erste und der zweite Digitalwert x, y zugeführt sind.

Aufgabe der Erfindung ist die Angabe einer digitalen Schaltungsanordnung, welche in Form einer integrierten Schaltung auf kleiner Chipfläche realisierbar ist, und die für Videoanwendungen weiterbildbar ist.

Diese Aufgabe wird durch die im Anspruch 1 angegebene Ausbildung gelöst.

Die Schaltungsanordnung nach der Erfindung und deren Weiterbildung, wie sie in den Unteransprüchen gekennzeichnet sind, werden im folgenden anhand der Zeichnungen näher erläutert:

Fig. 1 zeigt das Blockschaltbild der Grundschaltung,

Fig. 2 zeigt eine Weiterbildung der Schaltungsanordnung nach Fig. 1 zur weiteren Annäherung an die resultierende Zeigerlänge $B = (x^2 + y^2)^{1/2}$,

Fig. 3 zeigt als Funktionsdiagramm den Betrag der beiden auf B normierten Digitalwerte $|x|/B$ und $|y|/B$ in Abhängigkeit vom Drehwinkel p des resultierenden Zeigers,

Fig. 4 zeigt als Funktionsdiagramm den relativen Fehler $(Bo - B)/B$ (in Prozent) des mittels der Grundschaltung bestimmten nullten Annäherungswertes Bo in Abhängigkeit vom Drehwinkel p, und

Fig. 5 zeigt als Funktionsdiagramm den relativen Fehler $(B1 - B)/B$ (in Prozent) des mittels der Weiterbildung der Grundschaltung gebildeten ersten Annäherungswertes B1 in Abhängigkeit vom Drehwinkel p.

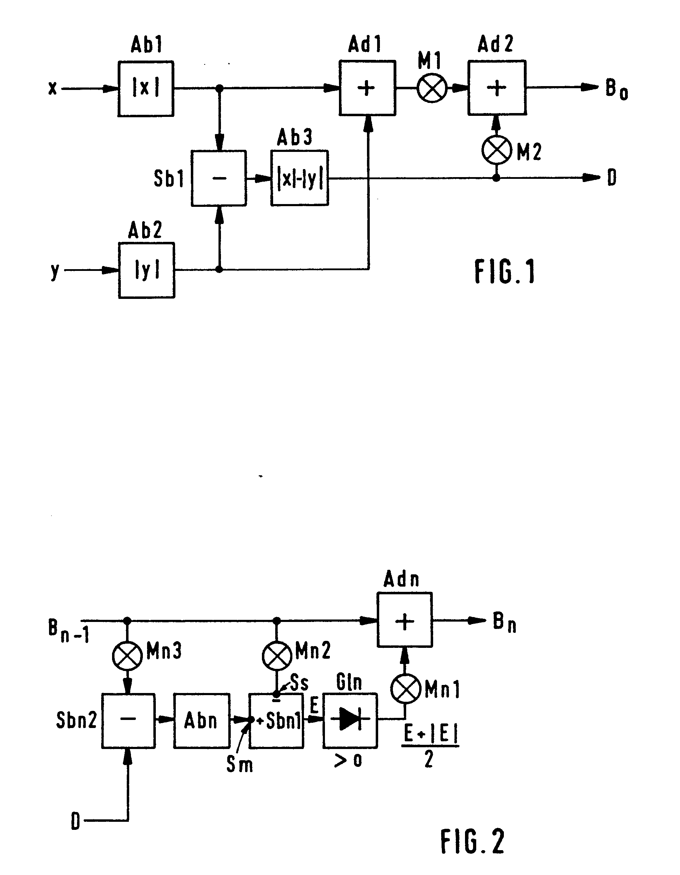

Fig. 1 zeigt die Grundschaltung, die die nullte Approximation Bo des Betrages B gemäss der Gleichung

$$Bo = m1 \cdot (|x| + |y|) + m2 \cdot D$$

mit $D = \big| |x| - |y| \big|$ erzeugt.

Diese Grundschaltung enthält die Absolutbetrag-Schaltkreise Ab1, Ab2 und Ab3, d.h. digitale Schaltkreise, welche negative Digitalgrössen invertieren. Die Grundschaltung gemäss Fig. 1 enthält ferner die beiden Addierer Ad1 und Ad2 bekannten Schaltungsaufbaus und den digitalen Subtrahierer sb1 bekannten Schaltungsaufbaus. M1 und M2 sind Festwert-Multiplizierer, d.h. Multiplizierer bekannten Aufbaus, an deren einen Eingang jeweils ein vorgegebener Multiplikator eingegeben wird, der beispielsweise an einem Festwertspeicher (ROM) abgegriffen wird.

Wie die Fig 1 veranschaulicht, ist bei der Grundschaltung der erste Digitalwert x über den ersten Absolutbetrag-Schaltkreis Ab1 an den ersten Eingang des ersten Addierers Ad1 und an den ersten Eingang des Subtrahierers Sb1 gelegt. Der zweite Eingang des Subrahierers Sb1 ist mit dem zweiten Eingang des ersten Addierers Ad1 und mit dem Ausgang des zweiten Absolutbetragschaltkreises Ab2 verbunden, an dessen Eingang der zweite Digitalwert y liegt.

Der Ausgang des ersten Addierers ist gemäss der Fig. 1 über den ersten Festwert-Multiplizierer M1 mit dem ersten Eingang des zweiten Addierers verbunden, an dessen zweitem Eingang der Ausgang des zweiten Festwert-Multiplizierers M2 angeschlossen ist, während der Eingang dieses Festwert-Multiplizierers M2 am Ausgang eines dritten Absolutbetragschaltkreises Ab3 liegt, der den Absolutwert am Ausgang des Subtrahierers Sb1 bildet.

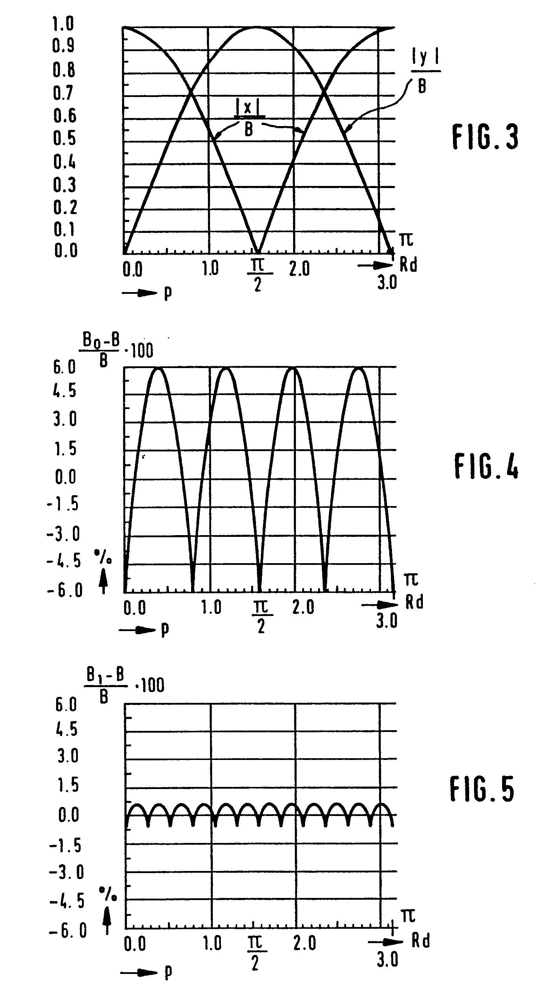

Am Ausgang des zweiten Addierers Ad2 kann nach geeigneter Wahl der Multiplikatoren von M1 und M2 der nullte Annäherungswert Bo abgegriffen werden, dessen Fehler durch Wahl von m1 = 0,6791 für den ersten Multiplizierer M1 und von m2 = 0,2614 für den zweiten Multiplizierer M2 weniger als 6% Fehler des Betrages aufweist. Die Fig. 3 zeigt die normierten Eingangssignale z und y, während die Fig. 4 den relativen Fehler von Bo/B in Prozent zeigt, welcher bis auf den Wert von höchstens 6% ansteigt. Eine derartige Annäherung an den Betrag B ist für manche Anwendung bereits ausreichend.

Für Videoanwendungen, insbesondere zur Demodulation eines quadraturmodulierten Videosignals, ist jedoch, wie noch ausgeführt wird, ein Fehler von weniger als ca. 0,5% anzustreben. Nach einer Weiterbildung der Grundschaltung nach der Erfindung gemäss der Fig. 1 wird mindestens eine Korrekturschaltung angeschlossen, deren Blockschaltbild in der Fig. 2 dargestellt ist. Die Numerierung der Multiplizierer, Addierer usw. schliesst sich in der Fig. 2 an die der Fig. 1 an. Da die Korrekturschaltung der Fig. 2 weitere drei Multiplizierer Mn1, Mn2 und Mn3 enthält, erhält man drei weitere Freiheitsgrade für eine optimale Wahl durch drei weitere Multiplikatoren m3, m4 und m5.

Zur bestimmungsgemässen Verwendung mit der Grundschaltung gemäss der Fig. 1 wird der Ausgang des zweiten Addierers Ad2 mit dem ersten Eingang des weiteren Addierersadn verbunden, dessen zweiter Eingang über den ersten Festwert-Multiplizierer Mn1 der Korrekturschaltung am Ausgang des digitalen Gleichrichters Gln liegt. Dieser erhält als Eingangssignal E das Ausgangssignal des digitalen Subrahierers Sbn1 und bildet nach Einweggleichrichtung das Signal $(E + |E|)/2$, also ein Signal welches stets grösser oder gleich Null ist. Der Ausgang des zweiten Festwertmultiplizierers Mn2 ist mit dem Subtrahend-Eingang Ss des Subtrahierers Sbn1 und dessen Minuend-Eingang Sm mit dem Ausgang des weiteren Absolutbetrag-Schaltkreises Abn verbunden. In der Korrekturschaltung liegen der Eingang des zweiten Festwert-Multiplizierers Mn2 und der Eingang eines dritten Festwert-Multiplizierers Mn3 an dem ersten Eingang des weiteren Addierers Adn. Am Eingang des weiteren Absolutbetrag-Schaltkreises Abn liegt der Ausgang eines zweiten Subtrahierers Sbn2, dessen erster Eingang mit dem Ausgang des dritten Festwert-Multiplizierers Mn3 und dessen zweiter Eingang mit dem zweiten Eingang D des zweiten Multiplizierers M2 der Grundschaltung verbunden ist.

Der Korrekturschaltung gemäss der Fig. 2 können noch weitere Korrekturschaltungen gleichen Aufbaus nachgeschaltet werden, die als Eingangssignal das Ausgangssignal der vorhergehenden Korrekturschaltung und das Signal am Eingang D des zweiten Multiplizierers M2 der Grundschaltung gemäss der Fig. 1 erhalten.

Bei Verwendung einer einzelnen Korrekturschaltung in Verbindung mit der Grundschaltung kann der relative Fehler beträchtlich vermindert werden. Wird gemäss einer Weiterbildung einer solchen Schaltungsanordnung nach der Erfindung ein erster Festwert-Multiplizierer M1 mit einem Multiplikator von m1 = 0,6591, ein zweiter Festwert-Multiplizierer M2 mit einem Multiplikator von m2 = 0,27183, ein in der Korrekturschaltung befindlicher erster Multiplizierer Mn1 mit einem Multiplikator von m3 = 0,19918, ein weiterer in der Korrekturschaltung befindlicher zweiter Festwert-Multiplizierer Mn2 mit einem Multiplikator von m4 = 0,17157 und ein gleichfalls dort befindlicher dritter Multiplizierer Mn3 mit einem Multiplikator von m5 = 0,53893 verwendet, so ist der relative Fehler erster Annäherung B1 zu dem an die beiden Eingänge angelegten Signal B kleiner als 0,43%, wie die Fig. 5 veranschaulicht. Ein solcher relativer Fehler ist zur Quadraturdemodulation eines Videosignals angemessen.

Bei einer monolithischen Integration der Anordnung ist der Kristallflächenaufwand zur Realisierung der vorstehend genannten Festwert-Multiplizierer nicht unbeträchtlich.

Da aber bereits bei Verwendung einer einzelnen Korrekturschaltung unabhängig voneinander fünf Multiplikatoren gewählt werden können, ist es möglich, einfach realisierbare Multiplikatoren zu wählen, ohne dass der relative Fehler gegenüber den oben erwähnten optimalen Werten sonderlich zunimmt. Eine solche Möglichkeit ergibt sich bei einer Wahl von m1 = 0,625 = 1/2 + 1/8, m2 = 0,25781 = 1/4 + 1/128, m3 = 0,1875 = 1/8 + 1/16, m4 = 0,1875 = 1/8 + 1/16 und m5 = 0,5625 = 1/2 + 1/16. Bei einer Wahl solcher Multiplikatoren vermindert sich der Kristallflächenaufwand für die Festwert-Multiplizierer beträchtlich. Es ergibt sich ein relativer Fehler von weniger als 0,52% und ein Flächenbedarf von ca. 1,5 mm² bei einer Auslegung mit Linienbreiten von 3 μm für eine monolithisch integrierte Schaltungsanordnung mit einer Korrekturschaltung für 8-Bit-Parallelübertragung über je einen Datenbus für eine 20 MHz-Datenübertragungsrate der beiden digitalen Komponenten.

## Patentansprüche

1. Schaltungsanordnung mit digitalen Schaltkreisen die mit einem ersten (x) und einem zweiten Digitalwert (y) als Eingangssignal gespeist ist und die ein digitales Ausgangssignal erzeugt, dessen Wert B angenähert gleich $|(x^2 + y^2)^{1/2}|$ ist, dadurch gekennzeichnet, dass ein Ausgangssignal mit nulltem Annäherungswert (Bo) mittels einer Grundschaltung derart erzeugt ist,

– dass der erste Digitalwert (x) über einen ersten Absolutbetrag-Schaltkreis (Ab1) am ersten Eingang eines ersten Addierers (Ad1) und am ersten Eingang eines Subtrahierers (Sb1) liegt, dessen zweiter Eingang mit dem zweiten Eingang des ersten Addierers (Ad1) und mit dem Ausgang eines zweiten Absolutbetrag-Schaltkreises (Ab2), an dessen Eingang der zweite Digitalwert (y) liegt, verbunden ist,

– dass der Ausgang des ersten Addierers (Ad1) über einen ersten Festwert-Multiplizierer (M1) mit dem ersten Eingang eines zweiten Addierers (Ad2) verbunden ist, an dessen zweiten Eingang der Ausgang eines zweiten Festwert-Multiplizierers (M2) angeschlossen ist, dessen Eingang (D) über einen dritten Absolutwertschaltkreis (Ab3) mit dem Ausgang des Subtrahierers (Sb1) verbunden ist, so dass der nullte Annäherungswert (Bo) am Ausgang des zweiten Addierers (Ad2) auftritt, falls ein bestimmter erster fester Multiplikator (m1) in den ersten Festwert-Multiplizierer (M1) und ein bestimmter zweiter fester Multiplikator (m2) in den zweiten Festwert-Multiplizierer (M2) eingegeben wird.

Schaltungsanordnung nach Anspruch 1 zur weiteren Annäherung eines digitalen Ausgangssignals an den Betrag (B) mittels mindestens einer Korrekturschaltung (Fig. 2) welche in Reihe zum Ausgang des zweiten Addierers (Ad2) liegt, dadurch gekennzeichnet,

– dass am Ausgang des zweiten Addierers (Ad2) mindestens ein weiterer Addierer (Adn) mit einem ersten Eingang liegt, während an seinem zweiten Eingang über einen ersten Festwert-Multiplizierer (Mn1) der Korrekturschaltung das mittels eines digitalen Gleichrichters (Gln) gleichgerichtete Ausgangssignal (E) eines ersten Subtrahierers (Sbn1) liegt, dessen Subtrahend-Eingang (Ss) mit dem Ausgang eines zweiten Festwert-Multiplizierers (Mn2) und dessen Minuend-Eingang (Sm) mit dem Ausgang eines weiteren Absolutbetrag-Schaltkreises (Abn) verbunden sind,

– dass in der Korrekturschaltung die Eingänge des zweiten Festwert-Multiplizierers (Mn2) und eines dritten Festwert-Multiplizierers (Mn3) an dem ersten Eingang des weiteren Addierers (Adn) liegen, und

– dass das Ausgangssignal des dritten Festwert-Multiplizierers (Mn3) am ersten Eingang eines zweiten Subtrahierers (Sbn2) liegt, dessen zweiter Eingang am Eingang (D) des zweiten Multiplizierers (M2) der Grundschaltung und dessen Ausgang am weiteren Absolutbetrag-Schaltkreis (Abn) liegt, so dass jeweils ein n-ter Annäherungswert (Bn) am Ausgang des weiteren Addierers (Adn) der n-ten Korrekturschaltung abgreifbar ist, falls bestimmte Multiplikatoren in die Festwert-Multiplizierer eingegeben werden.

3. Schaltungsanordnung nach Anspruch 2, dadurch gekennzeichnet, dass in der Grundschaltung:

– im ersten Festwert-Multiplizierer (M1) der Multiplikator m1 = 0,6591 ist,

– im zweiten Festwert-Multiplizierer (M2) der Multiplikator m2 = 0,27183 ist;

dass in der Korrekturschaltung

– im ersten Multiplizierer (Mn1) der Multiplikator m3 = 0,19918 ist,

– im zweiten Festwert-Multiplizierer (Mn2) der Multiplikator m4 = 0,17157 ist, und

– im dritten Multiplizierer (Mn3) der Multiplikator m5 = 0,53893 ist.

4. Schaltungsanordnung nach Anspruch 2, gekennzeichnet dadurch, dass in der Grundschaltung:

– im ersten Festwert-Multiplizierer (M1) der Multiplikator m1 = 0,625 ist,

– im zweiten Festwert-Multiplizierer (M2) der Multiplikator m2 = 0,25781 ist;

dass in der Korrekturschaltung

– im ersten Festwert-Multiplizierer (Mn1) der Multiplikator m3 = 0,1875 ist,

– im zweiten Multiplizierer (Mn2) der Multiplikator m4 = 0,1875 ist, und

– im dritten Festwert-Multiplizierer (Mn3) der Multiplikator m5 = 0,5625 ist.

## Revendications

1. Montage comportant des circuits numériques, qui est alimenté par une première valeur numérique (x) et une seconde valeur numérique (y) en tant que signal d'entrée et produit un signal de sortie numérique, dont la valeur (B) est approximativement égale à $|(x^2 + y^2)^{1/2}|$, caractérisé en ce qu'un signal de sortie possédant une valeur approchée d'ordre zéro (Bo) est produit à l'aide d'un circuit de base de telles sorte

– que la première valeur numérique (x) est appliquée par l'intermédiaire d'un premier circuit (Ab1) de formation d'une valeur absolue, à la première entrée d'un premier additionneur (Ad1) et à la première entrèe d'un soustracteur (Sb1), dont la seconde entrée est reliée à la seconde entrée du premier additionneur (Ad1) et à la sortie d'un second circuit (Ab2) de formation d'une valeur absolue, à l'entrée duquel est envoyée la seconde valeur numérique (y),

– que la sortie du premier additionneur (Ad1) est reliée par l'intermédiaire d'un premier multiplicateur (M1) réalisant une multiplication par une valeur fixe, à la première entrée d'un second additionneur (Ad2), à la seconde entrée duquel est raccordée la sortie d'un second multiplicateur (M2) réalisant une multiplication par une valeur fixe, dont la sortie (D) est reliée, par l'intermédiaire d'un troisième circuit (Ab3) de formation d'une valeur absolue, à la sortie du soustracteur (Sb1), de sorte que la valeur approchée d'ordre zéro (Bo) apparaît à la sortie du second additionneur (Ad2), dans le cas où un premier coefficient multiplicateur fixe déterminé (m) est introduit dans le premier multiplicateur (M1) réalisant une multiplication par une valeur fixe, et où un second coefficient multiplicateur fixe déterminé (m2) est introduit dans le second multiplicateur (M2) réalisant une multiplication par une valeur fixe.

2. Montage selon la revendication 1, servant à obtenir une approximation plus précise d'un signal de sortie numérique sur la valeur (B) à l'aide d'au moins un circuit de correction (figure 2), qui est branché en série avec la sortie du second additionneur (Ad2), caractérisé par le fait

– qu'au moins un additionneur supplémentaire (Adn) est raccordé par une première entrée à la sortie du second additionneur (Ad2), tandis qu'à sa seconde entrée est appliqué, par l'intermédiaire d'un premier multiplicateur (Mn1), réalisant une multiplication par une valeur fixe, le signal de sortie (E), redressé au moyen d'un redresseur numérique (Gln), d'un premier soustracteur (Sbn1), dont l'entrée (Ss) du nombre à soustraire est reliée à la sortie d'un second multiplicateur (Mn2), réalisant une multiplication par une valeur fixe, et dont l'entrée (Sm) du diminuende est reliée à la sortie d'un circuit supplémentaire (Abn) de formation d'une valeur absolue,

– que, dans le circuit de correction, les entrées du second multiplicateur (Mn2) réalisant une multiplication par une valeur fixe et d'une troisième multiplicateur (Mn3) réalisant une multiplication par une valeur fixe sont raccordées à la première entrèe de l'additionneur supplémentaire (Adn), et

– que le signal de sortie du troisième multiplicateur (Mn3), réalisant une multiplication par une valeur fixe, est raccordé à la première entrée du second soustracteur (Sbn2), dont la seconde entrée est raccordée à l'entrée (D) du second multiplicateur (M2) du circuit de base et dont la sortie est raccordée au circuit supplémentaire (Abn) de formation d'une valeur absolue, de sorte qu'une n-ème valeur approchée respective (Bn) peut être prélevée sur la sortie de l'additionneur supplémentaire (Adn) du n-ème circuit de correction, dans le cas où des coefficients multiplicateurs déterminés sont introduits dans les multiplicateurs réalisant des multiplications par des valeurs fixes.

3. Montage selon la revendication 2, caractérisé en ce que, dans le circuit de base:

— dans le premier multiplicateur (M1) réalisant une multiplication par une valeur fixe, le coefficient multiplicateur est m1 = 0,6591,

— dans le second multiplicateur (M2) realisant une multiplication par une valeur fixe, le coefficient multiplicateur est m2 = 0,27183;

et que dans le circuit de correction

— dans le premier multiplicateur (Mn1), le coefficient multiplicateur est m3 = 0,19918,

— dans le second multiplicateur (Mn2) réalisant une multiplication par une valeur fixe, le coefficient multiplicateur est m4 = 0,17157, et

— dans le troisième multiplicateur (Mn3), le coefficient multiplicateur est m5 = 0,53893.

4. Montage selon la revendication 2, caractérisé par le fait que, dans le circuit de base:

— dans le premier multiplicateur (M1) réalisant une multiplication par une valeur fixe, le coefficient multiplicateur est m1 = 0,625,

— dans le second multiplicateur (M2) réalisant une multiplication par une valeur fixe, le coefficient multiplicateur est m2 = 0,25781;

et que dans le circuit de correction

— dans le premier multiplicateur (Mn1) réalisant une multiplication par une valeur fixe, le coefficient multiplicateur est m3 = 0,1875,

— dans le second multiplicateur (Mn2), le coefficient multiplicateur m4 = 0,1875, et

— dans le troisième multiplicateur (Mn3) réalisant une multiplication par une valeur fixe, le coefficient multiplicateur est m5 = 0,5625.

**Claims**

1. Circuit arrangement comprising digital circuits which is fed with a first digital value (x) and a second digital value (y) and provides a digital output signal whose value B is approximately equal to $\lfloor (x^2 + y^2)^{1/2} \rfloor$, characterized in that, to produce an output signal with zeroth approximation (Bo) by means of a basic circuit,

— the first digital value (x) is fed through a first absolute-value circuit (Ab1) to the first input of a first adder (Ad1) and to the first input of a subtracter (Sb1) having its second input connected to the second input of the first adder (Ad1) and to the output of a second absolute-value circuit (Ab2) whose input is presented with the second digital value (y), and

— the output of the first adder (Ad1) is coupled through a first constant multiplier (M1) to the first input of a second adder (Ad2) having its second input connected to the output of a second constant multiplier (M2) whose input (D) is connected to the output of the subtracter (Sb1) via a third absolute-value circuit (Ab3), so that the output of the second adder (Ad2) will provide the zeroth approximation (Bo) if a predetermined first constant multiplication factor (m1) and a predetermined second constant multiplication factor (m2) are entered into the first constant multiplier (M1) and the second constant multiplier (M2), respectively.

2. A circuit arrangement as claimed in claim 1 for further approximation of a digital output signal to the value (B) by means of at least one correction circuit (Fig. 2) connected in series with the output of the second adder (Ad2), characterized in

— that the output of the second adder (Ad2) is coupled to a first input of at least one additional adder (Adn) to the second input of which the output signal (E) of a first subtracter (Sbn1) is applied after being rectified by a digital rectifier (Gln) and after passing through a first constant multiplier (Mn1) of the correction circuit, with the subtrahend input (Ss) of the first subtracter (Sbn1) connected to the output of a second constant multiplier (Mn2), and the minuend input (Sm) to the output of an additional absolute-value circuit (Abn),

— that in the correction circuit, the input of the second constant multiplier (Mn2) and the input of a third constant multiplier (Mn3) are connected to the first input of the additional adder (Adn), and

— that the output of the third constant multiplier (Mn3) is coupled to the first input of a second subtracter (Sbn2) having its second input connected to the input (D) of the second multiplier (M2) of the basic circuit and having its output coupled to the additional absolute-value circuit (Abn), so that the output of the additional adder (Adn) of the nth correction circuit will provide an nth approximation (Bn) if predetermined multiplication factors are entered into the constant multipliers.

3. A circuit arrangement as claimed in claim 2, characterized in that in the basic circuit,

— the multiplication factor in the first constant multiplier (M1) is m1 = 0.6591, and

— the multiplication factor in the second constant multiplier (M2) is m2 = 0.27183, and

that in the correction circuit,

— the multiplication factor in the first multiplier (Mn1) is m3 = 0.19918,

— the multiplication factor in the second constant multiplier (Mn2) is m4 = 0.17157, and

— the multiplication factor in the third multiplier (Mn3) is m5 = 0.53893.

4. A circuit arrangement as claimed in claim 2, characterized in that in the basic circuit,

— the multiplication factor in the first constant multiplier (M1) is m1 = 0.625, and

— the multiplication factor in the second constant multiplier (M2) is m2 = 0.25781, and

that in the correction circuit,

— the multiplication factor in the first constant multiplier (Mn1) is m3 = 0.1875,

— the multiplication factor in the second constant multiplier (Mn2) is m4 = 0.1875, and

— the multiplication factor in the third constant multiplier (Mn3) is m5 = 0.5625.

1 / 2

FIG.1

FIG.2

**FIG.3**

**FIG.4**

**FIG.5**